(19) Europäisches Patentamt
European Patent Office
Office européen des brevets

(11) **EP 3 830 029 B1**

(12) **FASCICULE DE BREVET EUROPEEN**

(45) Date de publication et mention de la délivrance du brevet:
**08.07.2026 Bulletin 2026/28**

(21) Numéro de dépôt: **19742640.6**

(22) Date de dépôt: **30.07.2019**

(51) Classification Internationale des Brevets (IPC):
**C01B 25/455** (2006.01)    **H01M 4/58** (2010.01)
**H01M 4/62** (2006.01)    **H01M 10/054** (2010.01)
**H01M 4/136** (2010.01)

(52) Classification Coopérative des Brevets (CPC):
**C01B 25/455; H01M 4/136; H01M 4/582; H01M 4/5825; H01M 4/625; H01M 10/054;**
C01P 2002/20; C01P 2004/61; C01P 2004/62; C01P 2006/11; C01P 2006/12; C01P 2006/40; Y02E 60/10

(86) Numéro de dépôt international:
**PCT/EP2019/070549**

(87) Numéro de publication internationale:
**WO 2020/025638 (06.02.2020 Gazette 2020/06)**

(54) **COMPOSITION D'ELECTRODE POSITIVE**

POSITIVELEKTRODENZUSAMMENSETZUNG

POSITIVE ELECTRODE COMPOSITION

(84) Etats contractants désignés:
AL AT BE BG CH CY CZ DE DK EE ES FI FR GB GR HR HU IE IS IT LI LT LU LV MC MK MT NL NO PL PT RO RS SE SI SK SM TR

(30) Priorité: **30.07.2018 FR 1857116**

(43) Date de publication de la demande:
**09.06.2021 Bulletin 2021/23**

(73) Titulaire: **SPECIALTY OPERATIONS FRANCE**
**69003 Lyon (FR)**

(72) Inventeurs:
- BERTRY, Laure
  93300 Aubervilliers (FR)
- AMISSE, Robin
  75015 Paris (FR)
- BUISSETTE, Valérie
  75015 PARIS (FR)
- BRAIDA, Marc-David
  94360 BRY SUR MARNE (FR)
- LESTURGEZ, Stéphanie
  17000 La rochelle (FR)
- LE MERCIER, Thierry
  93110 ROSNY-SOUS-BOIS (FR)

(74) Mandataire: **Senninger, Thierry**
**Specialty Operations France**
**Intellectual Assets Management**
**52, rue de la Haie Coq**
**93308 Aubervilliers Cedex (FR)**

(56) Documents cités:
WO-A1-2018/229447    CN-A- 103 594 716
FR-A1- 3 042 313    FR-A1- 3 042 313
US-A1- 2011 052 986

- ZIGENG LIU ET AL: "Local Structure and Dynamics in the Na Ion Battery Positive Electrode Material Na 3 V 2 (PO 4 ) 2 F 3", CHEMISTRY OF MATERIALS, vol. 26, no. 8, 22 April 2014 (2014-04-22), pages 2513 - 2521, XP055389788, ISSN: 0897-4756, DOI: 10.1021/cm403728w

- **GUO BIAO ET AL: "Enhanced electrochemical performance of Na3V2(PO4)2F3for Na-ion batteries with nanostructure and carbon coating", JOURNAL OF MATERIALS SCIENCE. MATERIALS IN ELECTRONICS, CHAPMAN AND HALL, LONDON, GB, vol. 29, no. 19, 23 July 2018 (2018-07-23), pages 16325 - 16329, XP036591754, ISSN: 0957-4522, [retrieved on 20180723], DOI: 10.1007/S10854-018-9722-8**

## Description

La présente demande revendique la priorité de la demande de brevet français N°1857116 déposée le 30 juillet 2018 et dont le contenu est intégralement incorporé par référence. En cas d'incohérence entre le texte de la présente demande et le texte de la demande de brevet français qui affecterait la clarté d'un terme ou d'une expression, il sera fait référence à la présente demande uniquement.

La présente invention est relative à une composition à base de NVPF et à son utilisation dans le domaine des batteries en tant que matériau électrochimiquement actif. Elle est également relative à une composition conductrice comprenant ladite composition, ainsi qu'au procédé permettant d'obtenir ladite composition.

## [Arrière plan technique]

La demande en batteries lithium-ion s'est accrue ces dernières années au regard de leur application dans une grande variété de dispositifs électroniques comme les téléphones portables et véhicules électriques. Or, les composés à base de lithium sont relativement coûteux et les sources naturelles en lithium sont inégalement réparties sur la planète et peu accessibles car localisées dans un petit nombre de pays. Des alternatives à cet élément ont donc été recherchées. A cette fin, des batteries sodium-ion ont été développées. Le sodium est en effet très abondant et réparti de façon homogène, et est avantageusement non toxique et économiquement plus intéressant.

Toutefois, le potentiel redox du couple $Na^+/Na$ est (-2,71 V vs ESH) et est donc supérieur à celui du couple $Li^+/Li$ (-3,05 V vs ESH), pour une masse molaire triple. Ces spécificités rendent difficile le choix d'un matériau hôte. Récemment, le matériau $Na_3V_2(PO_4)_2F_3$ (ou NVPF) s'est révélé être un matériau électrochimiquement actif particulièrement intéressant au regard de ses performances électrochimiques.

WO18229447 décrit un procédé de préparation d'un phosphate d'ammonium et de vanadium de formule $(NH_4)$ $(VO_2)(HPO_4)$ et d'un orthophosphate de vanadium $VPO_4$ susceptible d'être utilisé pour fabriquer du NVPF.

FR3042313 et WO 2017/064189 décrivent des particules de NVPF pouvant présenter une taille moyenne inférieure à 25 $\mu$m, de préférence inférieure à 10 $\mu$m, cette taille étant déterminée par analyse granulométrique au laser. Ce document ne précise pas les caractéristiques améliorées Dv10, Dv50 et Dv90 de la composition de l'invention.

CN 103594716 décrit des compositions à base de NVPF sans précisions sur les caractéristiques Dv10, Dv50 et Dv90.

CN 105655565 décrit des compositions à base de NVPF présentant une densité tassée pouvant dépasser 1 g/cm³. Ces compositions comprennent du phosphate de sodium vanadium de formule $Na_3V_2(PO_4)_3$ ainsi qu'un polymère conducteur, par exemple de type polyaniline (PANI). Il n'y a aucune mention de la distribution de tailles des particules.

## [Le problème technique]

La densité volumétrique d'énergie d'une électrode représente la quantité d'énergie qu'une électrode peut stocker par unité de volume. Elle doit être maximisée pour limiter l'encombrement des batteries. Ceci est d'autant plus vrai que certaines applications exigent un encombrement réduit de la batterie, par exemple lorsque la batterie est sous la forme d'une pile-bouton. Pour garantir l'extraction et la réinsertion des ions sodium du matériau électrochimiquement actif, une électrode est formée à partir d'une composition conductrice comprenant le matériau électrochimiquement actif, ainsi qu'une proportion idoine de matériaux électrochimiquement inactifs comme le liant ou l'additif conducteur et caractérisée par une certaine porosité. L'additif conducteur assure la percolation électronique à travers l'électrode. Le liant assure l'adhésion sur le collecteur de courant et la tenue mécanique de l'électrode composite. La porosité est quant à elle nécessaire à la percolation ionique entre l'électrolyte et le matériau actif. Afin de maximiser la capacité volumétrique (exprimée dans cette demande en Ah/L), on essaie de limiter la quantité de matériaux électrochimiquement inactifs ainsi que la porosité dans le composite, sans pour autant compromettre l'extraction et la réinsertion des ions sodium du matériau actif.

On recherche également à ce que le matériau électrochimiquement actif puisse être facilement formulé avec les matériaux électrochimiquement inactifs et à ce que la composition conductrice puisse être facilement enduite et sans conduire à des défauts tels que par exemple des films "striés".

En tant que matériau électrochimiquement actif, la composition de l'invention vise à résoudre ce compromis.

## [Figures]

**Fig. 1** représente la distribution de tailles de la composition de l'exemple 1 (en trait en pointillés) et de la composition de l'exemple comparatif 1 (en trait plein).

**Fig. 2** représente un cliché MEB de la composition de l'exemple 1. On remarque sur ce cliché que l'on ne détecte que des particules de NVPF et qu'il n'est pas possible d'observer de particules carbonées.

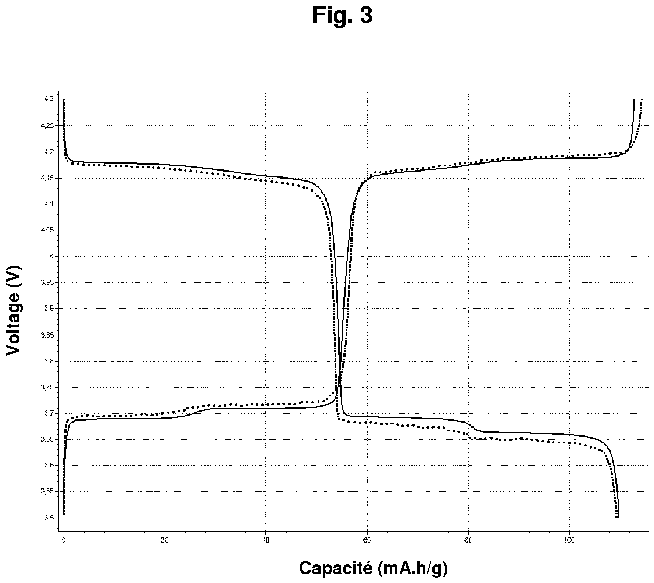

**Fig. 3** représente les courbes galvanostatiques en potentiel par rapport à la capacité de la composition de l'exemple 1 (trait en pointillés) et de la composition de l'exemple comparatif 1 (trait plein)

**[L'invention]**

L'invention est relative à une composition comprenant des particules de NVPF, éventuellement partiellement oxydé, ainsi que du carbone sous forme graphitisée, caractérisée par (1) un taux de carbone compris entre 1,0% et 3,5%, voire entre 1,0% et 3,0%, ce taux étant exprimé en poids de l'élément carbone par rapport au poids total de la composition, (2) par une densité tassée DT supérieure ou égale à 0,9 g/mL, voire supérieure ou égale à 1,0 g/mL, voire encore supérieure ou égale à 1,1 g/mL ou à 1,2 g/mL et (3) par une distribution en volume de tailles de particules présentant les caractéristiques suivantes :

- Dv90 ≤ 25,0 μm, voire ≤ 20,0 μm ;
- Dv50 compris entre 1,0 μm et 10,0 μm, plus particulièrement entre 1,0 μm et 7,0 μm, voire compris entre 1,0 μm et 5,0 μm ; (4) par une distribution de tailles de particules comprenant deux populations : une première population, majoritaire, centrée à une valeur comprise entre 1,0 μm et 4,0 μm, préférentiellement entre 2,0 μm et 3,5 μm ; et une seconde population, minoritaire, centrée à une valeur comprise entre 10,0 μm et 25,0 μm, préférentiellement entre 15,0 μm et 21,0 μm ;

la distribution étant obtenue par diffraction laser à partir d'une dispersion de la composition dans l'éthanol, notamment dans l'éthanol anhydre.

Plus de détails sur l'invention sont maintenant donnés ci-après, y compris dans les revendications.

La composition de l'invention comprend des particules de NVPF, éventuellement partiellement oxydé. Le NVPF, éventuellement partiellement oxydé, est l'élément majoritaire de la composition. Sa proportion en poids est supérieure ou égale à 97,0%, cette proportion étant exprimée par rapport au poids total de la composition. Cette proportion peut être comprise entre 97,0% et 99,0% en poids.

La composition de l'invention ne comprend pas de $Na_3V_2(PO_4)_3$ ou si elle en contient, sa proportion en poids dans la composition est d'au plus 1,0%, voire d'au plus 0,5%.

Plus particulièrement, la composition de l'invention consiste essentiellement en des particules de NVPF, éventuellement partiellement oxydé, ainsi qu'en du carbone sous forme graphitisée, caractérisée (1) par un taux de carbone compris entre 1,0% et 3,5%, voire entre 1,0% et 3,0%, ce taux étant exprimé en poids de l'élément carbone par rapport au poids total de la composition, (2) par une densité tassée DT supérieure ou égale à 0,9 g/mL, voire supérieure ou égale à 1,0 g/mL, voire encore supérieure ou égale à 1,1 g/mL ou à 1,2 g/mL et (3) par une distribution en volume de tailles de particules présentant les caractéristiques suivantes :

- Dv90 ≤ 25,0 μm, voire ≤ 20,0 μm ;
- Dv50 compris entre 1,0 μm et 10,0 μm, plus particulièrement entre 1,0 μm et 7,0 μm, voire compris entre 1,0 μm et 5,0 μm ; (4) par une distribution de tailles de particules comprenant deux populations : une première population, majoritaire, centrée à une valeur comprise entre 1,0 μm et 4,0 μm, préférentiellement entre 2,0 μm et 3,5 μm ; et une seconde population, minoritaire, centrée à une valeur comprise entre 10,0 μm et 25,0 μm, préférentiellement entre 15,0 μm et 21,0 μm ;

la distribution étant obtenue par diffraction laser à partir d'une dispersion de la composition dans l'éthanol, notamment dans l'éthanol anhydre.

Le NVPF est le composé de formule brute $Na_3V_2(PO_4)_2F_3$. Dans ce composé, le vanadium est présent au degré d'oxydation +III. Le NVPF peut être partiellement oxydé. Dans ce cas, le produit se caractérise par la présence également de vanadium au degré d'oxydation +IV ainsi que par la substitution partielle d'atomes de fluor par des atomes d'oxygène. On peut représenter le NVPF partiellement oxydé par la formule $Na_3V_2(PO_4)_2F_{3-x}O_x$, x étant un nombre entier compris entre 0 et 0,5.

Le NVPF éventuellement partiellement oxydé cristallise dans une maille orthorhombique de groupe d'espace Amam. Le paramètre de maille c peut être supérieur ou égal à 10,686 angstrom, voire à 10,750 angstrom. Il peut être sensiblement égal à 10,750 angstrom. Le paramètre de maille a peut quant à lui être compris entre 9,027 et 9,036 angstrom, de préférence sensiblement égal à 9,029 angstrom. Le paramètre de maille b peut quant à lui être compris entre 9,038 et 9,045 angstrom, de préférence sensiblement égal à 9,044 angstrom. Le volume de maille V est quant à lui compris entre 872,604 et 878,390 angstrom$^3$, de préférence sensiblement égal à 878,000 angstrom$^3$.

Pour le NVPF, le paramètre de maille c est compris entre 10,741 et 10,754 angstrom. Le paramètre de maille a est compris entre 9,028 et 9,031 angstrom. Le paramètre de maille b est compris entre 9,043 et 9,045 angstrom. Le volume de maille V est quant à lui compris entre de 877,335 et 878,390 angstrom$^3$, de préférence sensiblement égal à 878,000 angstrom$^3$.

La composition de l'invention se caractérise également par son taux de carbone. Celui-ci est compris entre 1,0% et 3,5%, voire entre 1,0% et 3,0%, ce taux étant exprimé en poids de l'élément carbone par rapport au poids total de la composition. Le taux de carbone est déterminé par microanalyse.

La composition comprend du carbone sous forme graphitisée. Le carbone sous forme graphitisée contribue à la conductivité électronique à la surface des particules de NVPF. La présence de carbone sous forme graphitisée dans la composition peut être mise en évidence à l'aide de la spectroscopie Raman. Plus précisément, le carbone sous forme graphitisée peut être mis en évidence par spectroscopie Raman par la présence d'une bande de vibration située entre 1580 et 1600 cm$^{-1}$, plus particulièrement centrée autour de 1590 cm$^{-1}$. Le carbone sous forme graphitisée est obtenu par décomposition thermique à haute température d'un composé hydrocarboné et oxygéné, tel que décrit plus loin. La décomposition thermique conduit également à la formation de carbone amorphe.

La composition de l'invention peut présenter un rapport R inférieur ou égal à 1,5, de préférence inférieur ou égal à 1,0, voire inférieur ou égal à 0,9, dans lequel :

- R désigne la moyenne arithmétique du rapport $I_D / I_G$ calculé sur au moins 6 mesures réalisées à divers endroits d'un échantillon de la composition ;
- $I_D$ désigne l'intensité de la bande de vibration Raman centrée autour de 1340 cm$^{-1}$ ;
- $I_G$ désigne l'intensité de la bande de vibration Raman centrée autour de 1590 cm$^{-1}$.

La bande de vibration autour de 1340 cm$^{-1}$ est attribuable au carbone amorphe (ou désordonné). Cette bande est généralement située entre 1330 et 1360 cm$^{-1}$. La bande de vibration autour de 1590 cm$^{-1}$ est attribuable au carbone graphitisé. Cette bande est généralement située entre 1580 et 1600 cm$^{-1}$.

La composition de l'invention présente par ailleurs une densité tassée DT ("tapped density" en Anglais) qui est supérieure ou égale à 0,9 g/mL, voire supérieure ou égale à 1,0 g/mL, voire encore supérieure ou égale à 1,1 g/mL ou à 1,2 g/mL. La densité tassée est mesurée de façon connue à l'aide d'un appareil de tassement de poudre.

On peut appliquer la méthode de détermination de la densité tassée suivante :

i) remplir une éprouvette graduée de 25 mL, de préférence de classe A+ selon la norme ISO 6706, avec la composition, le volume initial Vi de cette composition étant d'environ 20 mL;
ii) l'éprouvette est ensuite soumise à une série de 3000 coups ;
ii) puis, on mesure le volume final Vf de la composition.

La densité tassée est alors définie par :

$$DT \text{ (en g/mL)} = \text{masse de la composition} / \text{volume Vf}$$

Ainsi, l'invention telle qu'elle est définie dans la présence demande, y compris dans les revendications, se rapporte notamment à une composition comprenant des particules de NVPF, éventuellement partiellement oxydé, ainsi que du carbone sous forme graphitisée, caractérisée par (1) un taux de carbone compris entre 1,0% et 3,5%, voire entre 1,0% et 3,0%, ce taux étant exprimé en poids de l'élément carbone par rapport au poids total de la composition, (2) par une densité tassée DT supérieure ou égale à 0,9 g/mL, voire supérieure ou égale à 1,0 g/mL, voire encore supérieure ou égale à 1,1 g/mL ou à 1,2 g/mL et (3) par une distribution en volume de tailles de particules présentant les caractéristiques suivantes :

- Dv90 ≤ 25,0 µm, voire ≤ 20,0 µm ;
- Dv50 compris entre 1,0 µm et 10,0 µm, plus particulièrement entre 1,0 µm et 7,0 µm, voire compris entre 1,0 µm et 5,0 µm ;

la distribution étant obtenue par diffraction laser à partir d'une dispersion de la composition dans l'éthanol, notamment dans l'éthanol anhydre,

et la densité tassée étant déterminée par la méthode suivante consistant à :

i) remplir une éprouvette graduée de 25 mL, de préférence de classe A+ selon la norme ISO 6706, avec la composition, le volume initial Vi de cette composition étant d'environ 20 mL;

ii) l'éprouvette est ensuite soumise à une série de 3000 coups ;

ii) puis, on mesure le volume final Vf de la composition,

la densité tassée étant alors définie par la relation suivante :

$$DT \text{ (en g/mL)} = \text{masse de la composition / volume Vf.}$$

Généralement, un coup consiste à soulever l'éprouvette d'une certaine hauteur et à la laisser retomber. Cette hauteur peut être par exemple de 0,5 inch.

On considère généralement qu'après 3000 coups, le volume de la composition n'évolue plus. Après la série de 3000 coups, on pourra continuer à soumettre l'éprouvette à une autre série de coups pour vérifier que la valeur absolue de la différence de volume entre les deux séries de coups consécutives soit inférieure à 2,0% (c'est-à-dire (| $V_{\text{première série}}$ - $V_{\text{série suivante}}$| )/$V_{\text{première série}}$ x 100 < 2,0%). Si cette différence est toutefois supérieure ou égale à 2,0%, on poursuit avec d'autres séries de coups jusqu'à ce que cette différence soit inférieure à 2,0%. Le volume Vf à prendre en compte est celui pour lequel la valeur absolue de la différence de volume entre les deux séries de coups consécutives est inférieure à 2,0%.

La méthode de détermination de la densité tassée peut être trouvée plus particulièrement dans la partie exemples.

La densité tassée est généralement inférieure ou égale à 2,0 g/mL, voire à 1,8 g/mL, voire encore à 1,5 g/mL.

La composition de l'invention présente également une distribution de tailles de particules particulière. Celle-ci est mesurée par diffraction laser à partir d'une dispersion de la composition dans l'éthanol, notamment dans l'éthanol anhydre. La diffraction laser permet de déterminer les distributions granulométriques de particules en mesurant la variation angulaire de l'intensité de lumière diffusée lorsqu'un faisceau laser traverse un échantillon de particules dispersées. Les grosses particules diffusent la lumière à de petits angles par rapport au faisceau laser et les petites particules diffusent la lumière à des angles supérieurs. Les caractéristiques de la distribution telles que Dv10, Dv50, Dv90 qui sont données dans la présente demande sont obtenues à partir de la distribution en volume et non en nombre. Les paramètres Dv10, Dv50 et Dv90 ont le sens habituel dans le domaine des mesures par diffraction laser. Voir par exemple, https://www.horiba.com/fileadmin/uploads/Scientific/Documents/PSA/PSA Guide book.pdf

On note Dvx la valeur qui est déterminée sur la distribution en volume des tailles des particules pour laquelle x% des particules ont une taille inférieure ou égale à cette valeur Dvx. Ainsi, par exemple, pour ce qui est de Dv10, 10% des particules ont une taille qui est inférieure à Dv10. Par exemple encore, pour ce qui est de Dv90, 90% des particules ont une taille qui est inférieure à Dv90. Dv50 correspond à la valeur médiane de la distribution en volume.

Ainsi, pour la composition de l'invention, Dv90 est inférieur ou égal à 25,0 $\mu$m, voire inférieur ou égal à 20,0 $\mu$m. Dv90 peut être compris entre 5,0 $\mu$m et 25,0 $\mu$m, voire entre 5,0 $\mu$m et 20,0 $\mu$m.

Par ailleurs, Dv50 est compris entre 1,0 $\mu$m et 10,0 $\mu$m, plus particulièrement entre 1,0 $\mu$m et 7,0 $\mu$m, voire compris entre 1,0 $\mu$m et 5,0 $\mu$m.

Par ailleurs, Dv10 peut être supérieur ou égal à 0,50 $\mu$m, voire supérieur ou égal à 1,0 $\mu$m. La distribution est par ailleurs étroite ce qui se caractérise par un coefficient de dispersion $\sigma$/m d'au plus 10,0. Ce coefficient est déterminé par la formule suivante : $\sigma$/m = (Dv90-Dv10)/Dv50. $\sigma$/m peut être plutôt compris entre 2,0 et 8,0, plus particulièrement entre 2,5 et 6,0, voire entre 2,5 et 5,0.

La distribution de tailles de particules comprend deux populations : une première population, majoritaire, centrée à une valeur comprise entre 1,0 $\mu$m et 4,0 $\mu$m, préférentiellement entre 2,0 $\mu$m et 3,5 $\mu$m ; et une seconde population, minoritaire, centrée à une valeur comprise entre 10,0 $\mu$m et 25,0 $\mu$m, préférentiellement entre 15,0 $\mu$m et 21,0 $\mu$m.

La première population est majoritaire et la seconde population est minoritaire.

Ceci peut être notamment mis en évidence par le fait que le rapport entre l'intensité du pic de la première population et l'intensité du pic de la seconde population est supérieure ou égal à 3,0.

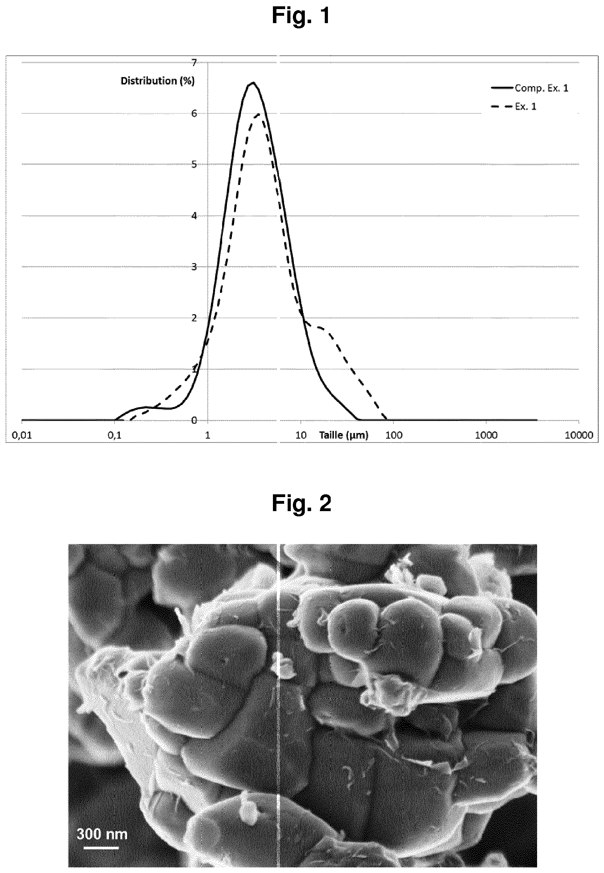

L'expression "population centrée à une valeur donnée" signifie la présence sur la distribution déconvoluée d'un pic dont le maximum est situé à cette valeur donnée. Pour la déconvolution, on peut considérer que les populations sont des gaussiennes. Sur la Figure 1, on peut distinguer sur la distribution de tailles la présence de cette double population.

Par ailleurs, la proportion des particules de tailles supérieures ou égales à 12,0 $\mu$m (notée $P_{12\,\mu m}$) peut être plus particulièrement supérieure ou égale à 5,0%, voire supérieure ou égale à 10,0%, voire encore supérieure ou égale à 15,0%. $P_{12\,\mu m}$ est déterminée à partir de la distribution de tailles en volume.

La composition de l'invention peut présenter une surface spécifique BET au moins égale à 2 m$^2$/g, voire supérieure ou égale à 10 m$^2$/g. Cette surface spécifique peut être comprise entre 2 et 15 m$^2$/g, voire entre 10 et 15 m$^2$/g. La surface BET fait référence à la surface spécifique obtenue par adsorption/désorption d'azote selon la méthode Brunauer-Emmett-Teller bien connue. La méthode de détermination de la surface spécifique BET peut être trouvée dans les exemples.

La composition de l'invention peut être préparée par le procédé comprenant les étapes suivantes :

a) on agite un mélange formé de $V_2O_5$ et de $NH_4H_2PO_4$, ces deux réactifs étant tous deux à l'état solide, ainsi que d'eau dont la proportion initiale est comprise entre 75% et 150%, cette proportion étant calculée en poids par rapport à l'ensemble des deux réactifs $V_2O_5$ et $NH_4H_2PO_4$ ;

b) la pâte humide issue de l'étape précédente est calcinée à une température d'au moins 700°C pour conduire à la formation de $VPO_4$ ;

c) le $VPO_4$ obtenu à l'étape b) est mélangé avec du fluorure de sodium et un composé hydrocarboné et oxygéné, qui se décompose thermiquement en carbone partiellement sous forme graphitisée, et le mélange ainsi obtenu est calciné à une température d'au moins 700°C ;

d) le produit obtenu à l'étape c) est désaggloméré pour conduire à la composition de l'invention.

A l'étape a), on forme un mélange comprenant $V_2O_5$, $NH_4H_2PO_4$ et de l'eau. Les deux composés $V_2O_5$ et $NH_4H_2PO_4$ sont de préférence présents sous forme de poudres. On peut utiliser des poudres dont les particules présentent un diamètre Dv50 d'au plus 100 $\mu$m, voire d'au plus 50 $\mu$m. Dv50 est le diamètre médian obtenu à partir d'une distribution de tailles en volume déterminée par un granulomètre laser. Il est préférable d'utiliser un mélange pour lequel les deux réactifs de départ ont été intimement mélangés.

Pour obtenir un NVPF de bonne pureté, il est préférable d'utiliser un mélange proche de la stœchiométrie de la réaction (I). On peut par exemple utiliser un mélange comprenant $V_2O_5$ et $NH_4H_2PO_4$ dans un rapport molaire initial V / P compris entre 0,9 et 1,1, voire entre 0,95 et 1,05.

Le mélange comprend également de l'eau dont la proportion initiale en poids est comprise entre 75% et 150%, cette proportion étant calculée en poids par rapport à l'ensemble des deux réactifs $V_2O_5$ et $NH_4H_2PO_4$. Cette proportion est celle de l'eau qui est présente dans le mélange au début de l'étape a).

La préparation du mélange repose sur le mélange de $V_2O_5$, de $NH_4H_2PO_4$ et d'eau dans un ordre quelconque. On peut par exemple mélanger intimement les deux poudres, rajouter l'eau au mélange des deux poudres ainsi obtenu et mélanger ensuite l'ensemble. Ce mélange peut être réalisé dans un outil de mélange adapté à la rhéologie du mélange.

La réaction entre les deux réactifs s'écrit :

$$V_2O_5 + 2\ NH_4H_2PO_4 \rightarrow 2\ (NH_4)(VO_2)(HPO_4) + H_2O \qquad (I)$$

Le mélange décrit plus haut est agité avec tout outil de mélange adapté aux milieux visqueux, comme par exemple un agitateur à hélice, un agitateur à pâles inclinées ou un malaxeur. En effet, on observe que lorsque la réaction progresse, la viscosité du mélange augmente pour conduire à une pâte visqueuse. A l'échelle du laboratoire, on a pu utiliser le malaxeur Controlab L0031.2.

L'agitation peut être conduite à une température qui n'a pas à être élevée. Ainsi, cette température peut être d'au plus 100°C, voire d'au plus 60°C, voire même d'au plus 30°C. Lorsque la température initiale à laquelle commence l'agitation est inférieure à 50°C, voire inférieure à 30°C, la réaction est plus longue, ce qui permet un meilleur contrôle de la viscosité du mélange (laquelle a tendance à augmenter avec l'avancée de la réaction) et évite également la prise en masse du mélange réactionnel. La durée de la réaction dépend de la quantité d'eau présente initialement dans le mélange, de l'état de division des solides utilisés au départ ainsi que de la forme physique du mélange. Cette durée est généralement comprise entre 2 h et 60 h. Il est possible de suivre l'état d'avancement de la réaction (I) selon plusieurs méthodes. Une première méthode visuelle consiste à disperser dans 5 mL d'eau désionisée sous ultrasons 15 mg d'un échantillon prélevé au cours de la réaction. Lorsqu'il reste des réactifs de départ, le mélange ainsi formé se présente sous la forme d'une dispersion opaque alors que lorsque l'avancement est bien avancé, le mélange ainsi formé se présente sous forme d'une solution translucide de couleur jaune vif. De façon plus quantitative, selon une seconde méthode, on peut suivre la réaction chimique en analysant à l'aide d'un diffractomètre aux rayons X (DRX) les échantillons prélevés au cours de la réaction.

A l'issue de l'étape a), on obtient une pâte humide.

A l'étape b), la pâte humide issue de l'étape précédente est calcinée à une température d'au moins 700°C, voire d'au moins 800°C, pour conduire à la formation de $VPO_4$. Cette température est de préférence comprise entre 700°C et 1000°C pour développer la cristallinité du produit ($VPO_4$ présentant une structure orthorhombique) tout en évitant la décomposition du $VPO_4$.

A l'étape c), le $VPO_4$ obtenu à l'étape b) est mélangé avec la quantité stœchiométrique de fluorure de sodium et un composé hydrocarboné et oxygéné, source du carbone présent dans la composition, et le mélange ainsi obtenu est calciné à une température d'au moins 700°C, voire d'au moins 800°C. Il est avantageux d'utiliser un mélange dans lequel les solides sont intimement mélangés. Pour obtenir un mélange bien intime, on peut utiliser un $VPO_4$ qui aura été préalablement broyé et/ou tamisé. On peut par exemple utiliser un $VPO_4$ broyé et tamisé qui présente un Dv50 compris entre 20 et 60 $\mu$m et un Dv90 entre 80 et 100 $\mu$m, la distribution étant déterminée elle-aussi à partir d'une suspension dans l'éthanol anhydre.

Le composé hydrocarboné et oxygéné conduit par décomposition thermique au carbone, notamment sous forme graphitisée, qui est présent dans la composition. Ce composé peut être par exemple un sucre tel que par exemple le glucose, le saccharose, le sucrose ou le fructose ou un carbohydrate tel que par exemple l'amidon ou un dérivé cellulosique. Plus préférentiellement, il s'agit d'un dérivé cellulosique et encore plus particulièrement de cellulose microcristalline.

La source de carbone présent dans la composition est importante car elle est susceptible d'avoir une influence sur la densité tassée et sur les propriétés électrochimiques (cf. exemple comparatif 1). La proportion du composé hydrocarboné et oxygéné dans le mélange à base de $VPO_4$ et de NaF peut être comprise entre 0,5% et 15,0% en poids, voire entre 8,0% et 12,0%, cette proportion étant calculée par rapport à l'ensemble du mélange $VPO_4$ et NaF.

Au cours de l'étape b) ou de l'étape c), il convient de minimiser le contact du mélange réactionnel avec l'oxygène. Pour ce faire, on peut conduire la calcination dans un milieu confiné et/ou limiter la présence d'oxygène par l'introduction dans le récipient dans lequel a lieu la calcination, d'un gaz inerte tel que l'azote ou l'argon. Pour ce faire, il peut aussi être avantageux de conduire la calcination dans un récipient fermé, formé d'un matériau dense et peu poreux. A l'échelle du laboratoire, un creuset en SiC fermé par un couvercle dans le même matériau a ainsi été utilisé.

A l'étape d), le produit obtenu à l'étape c) est désaggloméré. On peut utiliser pour cela un broyeur à billes ou un broyeur à jet d'air. Le broyage à billes consiste à mettre en rotation autour de son axe horizontal une cuve partiellement remplie du produit à broyer et de billes de broyage. La mise en rotation à une vitesse limitée induit le broyage du produit par l'intermédiaire des chocs entre le produit et les billes mises en rotation. Les paramètres critiques pour maîtriser la granulométrie finale du produit sont le taux de remplissage de la cuve, généralement inférieur aux $^2/_3$ du volume de la cuve ; le rapport massique de chargement entre le produit à broyer et les billes, qui peut être compris entre 1:4 et 1:15, préférentiellement entre 1:4 et 1:10 ; la nature des billes de broyage, qui peuvent être en zircone, zircone yttriée ou alumine par exemple, traduisant différentes duretés du média broyant ; la taille des billes de broyage, généralement comprise entre 0,5 mm à 5 cm, préférentiellement entre 1 et 2 mm ; la vitesse de rotation de la cuve, généralement inférieure à 100 rpm, préférentiellement inférieure à 80 rpm ; et la durée de broyage, qui peut varier entre 15 minutes et 4 heures, préférentiellement entre 30 minutes et 2 heures.

Quant au broyage à jet d'air, il consiste à entraîner le produit à broyer dans un flux d'air à vitesse élevée de manière à créer des chocs entre particules permettant de réduire leur taille.. On trouvera plus de détails sur cette technique à l'adresse : https://www.hosokawa-alpine.com/powder-particle-processina/machines/jet-mills/afg-fluidised-bed-opposed-jet-mill/. Le débit d'alimentation du produit à broyer dans la chambre de broyage est ajusté par exemple à l'aide d'une vis doseuse afin de constituer un lit fluidisé en régime permanent. Un sélecteur est placé en sortie de la chambre de broyage de manière à ne récupérer que les particules suffisamment fines. Les paramètres critiques pour maîtriser la granulométrie finale du produit sont la pression de l'air introduit dans la chambre de broyage et la vitesse de rotation du sélecteur. Un exemple de broyeur à air est le broyeur AFG-100 commercialisé par la société Hosokawa. On peut utiliser les conditions décrites dans l'exemple 1.

On peut suivre l'avancement de la désagglomération en prélevant au cours du temps un échantillon du produit de façon à déterminer la distribution de tailles dans l'éthanol anhydre. Ceci permet de déterminer si les conditions de la désagglomération sont adéquates pour obtenir les caractéristiques de densité tassée et de distribution de tailles souhaitées. Il est généralement conseillé de commencer à désagglomérer avec les conditions de désagglomération les moins sévères. Si les caractéristiques de densité tassée et de distribution de tailles ne sont pas obtenues, il est alors possible de continuer la désagglomération avec des conditions plus sévères.

La composition de l'invention peut être préparée plus particulièrement selon le mode opératoire décrit à l'exemple 1.

La composition de l'invention peut être utilisée en tant que matériau électrochimiquement actif d'électrodes pour batteries au sodium ou pour batteries sodium-ion. L'invention est aussi relative à une électrode comprenant une composition conductrice comprenant la composition de l'invention, au moins un matériau conducteur d'électrons et éventuellement un liant. La proportion de la composition de l'invention dans la composition conductrice est généralement supérieure à 40,0% en poids, cette proportion étant rapportée au poids total de la composition conductrice. Cette proportion peut être comprise entre 40,0% et 80,0%. La proportion du matériau conducteur est généralement inférieure à 50,0% en poids, cette proportion étant rapportée au poids total de la composition conductrice. Cette proportion peut être comprise entre 8,0% et 30,0%. Plus particulièrement, une composition conductrice peut comprendre de 75,0% à 85,0% en poids de la composition de l'invention, de 5,0% à 15,0% en poids du matériau conducteur et de 5,0% à 15,0% en poids de liant.

Le matériau conducteur d'électrons peut être choisi parmi les fibres de carbone, le noir de carbone, les nanotubes de carbone, le graphène et leurs analogues. Un exemple de matériau conducteur est le super P carbon, par exemple le H 30253, commercialisé par Alfa Aesar. Le liant peut être avantageusement un polymère. Le liant peut être avantageusement choisi parmi le polytétrafluoroéthylene, le polyfluorure de vinylidène ou un copolymère de fluorure de vinylidène et d'au moins un comonomère, tel que par exemple l'hexafluoropropylène, les polymères dérivés de carboxyméthylcellulose, les polysaccharides et les latex notamment de type caoutchouc styrène-butadiène. Le liant est préférentiellement un copolymère de fluorure de vinylidène et d'au moins un comonomère, tel que par exemple l'hexafluoropropylène. Il peut s'agir par exemple du grade Solef 5130 commercialisé par Solvay.

La composition conductrice peut être préparée en mélangeant ensemble les ingrédients qui la constituent en présence d'un solvant polaire comme la N-méthyl-pyrrolidone. Lorsque la viscosité du mélange est importante, on peut utiliser un malaxeur adapté aux viscosités élevées. Dans le cas d'un liant polymère, on peut par exemple dissoudre d'abord le liant dans la NMP, ajouter ensuite sous agitation le matériau conducteur, puis la composition selon l'invention. On peut ensuite déposer le mélange sur une feuille d'aluminium, puis évaporer la NMP, par exemple à l'aide d'un chauffage.

L'électrode de l'invention peut être utilisée comme électrode positive d'un générateur au sodium. Avantageusement, elle est privilégiée pour une utilisation comme électrode positive pour une batterie secondaire au sodium ou sodium-ion.

**[Exemples]**

Détermination du taux de carbone

Le taux de carbone est mesuré par microanalyse avec un analyseur carbone/soufre de marque Horiba EMIA 320 V2.

Détermination de la distribution de tailles des particules

La distribution de taille de particules est mesurée par diffraction laser sur une suspension des particules dans l'éthanol anhydre. Un appareil Malvern Mastersizer 3000 équipé du module Hydro SV est utilisé. La cuve de l'appareil est remplie d'éthanol absolu (indice de réfraction pour l'éthanol de 1,360) et mise sous agitation à 1800 tr/min. Quelques milligrammes de poudre sont alors introduits directement dans la cuve de manière à avoir une obscuration comprise entre 5 et 15%. Le modèle optique utilisé est Fraunhofer.

La séquence de mesure va consister en 5 mesures successives sur l'échantillon. Les durées d'acquisition sont définies comme suit :

- durée de la mesure de bruit de fond (rouge) : 10,00 s ;
- durée de la mesure d'échantillon (rouge) : 10,00 s ;
- effectuer la mesure en lumière bleue : oui ;
- durée de la mesure de bruit de fond (bleu) : 10,00 s ;
- durée de la mesure d'échantillon (bleu) : 10,00 s.

Détermination de la densité tassée

Une éprouvette graduée normée classe A+ de 25 mL ($\pm$ 0,2 mL à 20 °C) est utilisée et remplie avec précisément environ 20 mL de la composition non tassée. 3000 coups sont imposés avant lecture du volume final occupé par la poudre tassée. La densité tassée est alors déterminée par la formule suivante :

$$\text{DT (en g/mL)} = \text{masse de composition / volume final déterminé}$$

Détermination de la surface spécifique BET

La surface spécifique BET est mesurée suivant la méthode de BRUNAUER-EMMETT- TELLER dite "à un point" sur un appareil Mountech Macsorb. Cet instrument mesure la surface spécifique par la méthode de flux de gaz qui implique l'écoulement continu d'un mélange gazeux adsorbant et inerte sur l'échantillon à la pression atmosphérique. Le mélange de gaz utilisé est de 70% en hélium et 30% en azote soit une pression relative de 0,3.

Les échantillons sont initialement dégazés pendant 2 heures à 200°C sous flux d'azote avant mise en place sur le carrousel de l'appareil de mesure. Lors de l'analyse, un dégazage supplémentaire de 5 min à 200°C est réalisé par l'appareil avant analyse. Lors de l'analyse, les phases d'adsorption et de désorption sont enregistrées. Les mesures de surface spécifique sont alors calculées sur la phase de désorption. A chaque échantillon, une calibration du capteur est effectuée par injection d'un volume connu d'azote pure. La masse d'échantillon utilisé pour cette mesure correspond à la masse d'échantillon après dégazage.

Détermination du diagramme de diffraction des rayons X sur poudre

Les diffractogrammes de rayons X sur poudre ont été obtenus en géométrie Bragg Brentano, avec fentes variables. L'acquisition se fait entre $2\theta = 5°$ et $2\theta = 90°$, sur un montage X Pert Pro MPD de Panalytical, équipé d'une source X Ray tube à anticathode de cuivre, à 40 kV de tension et 30 mA de courant. Le détecteur est un détecteur linéaire XCelerator de longueur d'arc 2,122°. L'intervalle de PHD est l'intervalle par défaut de 37-80%. Un filtre nickel placé devant le détecteur permet d'atténuer la diffraction par la raie K beta du cuivre. Le temps de pose est de 40 secondes par pas de 0,017°. L'analyse de phase est effectuée sur le logiciel High Score Plus muni de la dernière version de la base de données ICDD PDF4+. Le goniomètre est vérifié périodiquement à l'aide d'un étalon de silicium polycristallin.

Enregistrement et traitement des spectres de spectroscopie Raman

Les spectres ont été enregistrés sur un spectromètre Horiba - XploRA PLUS entre 50 et 2600 cm$^{-1}$ avec un laser à 532 nm (100 mW de puissance nominale), un objectif de 100X, un réseau de 1200 tr/mm, un filtre de 1%, un trou confocal de 100 $\mu$m et un temps d'acquisition de 2 x 120 s. Le logiciel utilisé pour les acquisitions et les traitements est le Labspec version 6-4-4-16 de la société Horiba. Afin d'effectuer l'acquisition, l'échantillon est déposé sous forme de poudre sur une fenêtre en fluorure de calcium, elle-même déposée sur une lame de verre recouverte d'aluminium. La mise au point est réalisée sur l'échantillon avec un objectif 100X. Après acquisition, les spectres sont lissés puis déconvolués en deux contributions de forme gaussienne : l'une centrée autour de 1340 cm$^{-1}$ et l'autre centrée autour de 1580 cm$^{-1}$. Les intensités sont déterminées à partir de la ligne de base tracée entre deux points sur le spectre situés à 700 cm$^{-1}$ et à 2000 cm$^{-1}$.

Préparation des électrodes positives à partir de la composition de l'invention

Les compositions conductrices (ou encres d'électrode) sont préparées en mélangeant les compositions à base de NVPF avec du noir de carbone (Super P carbon) et un polymère fluoré (PVDF Solef 5130) en proportions massiques respectives 80:10:10 dans le solvant N-méthyl-2-pyrrolidone afin d'obtenir une encre visqueuse. Cette encre est ensuite déposée à l'aide d'un applicateur de film avec une épaisseur de 150 $\mu$m sur une feuille d'aluminium de 20 $\mu$m d'épaisseur, puis séchée à 90°C jusqu'à évaporation complète du solvant. Des disques d'électrode de 14 mm de diamètre sont découpés dans le film sec, puis pressés à température ambiante à l'aide d'une presse uniaxiale avec une pression de 1,3 tonne/cm$^2$ pendant 1 minute. Les disques sont ensuite séchés sous vide primaire à 120 °C pendant 10 h avant d'être transférés en boîte à gants sous atmosphère d'argon.

On a pu constater que les compositions de l'invention se formulaient facilement et ne conduisaient pas à des films "striés".

Assemblage de cellules électrochimiques de type "pile bouton"

Les électrodes de NVPF sont assemblées en configuration demi-cellule, face à une électrode négative en sodium métallique, dans une géométrie de pile bouton 2032 (20 mm de diamètre pour 3,2 mm d'épaisseur). L'électrolyte utilisé est composé d'un mélange équivolumique de carbonate d'éthylène et de diméthylcarbonate contenant une mole par litre de sel hexafluorophosphate de sodium dissout, mélange auquel est ajouté 1% en masse de carbonate de fluoroéthylène. La pile bouton est constituée de l'électrode positive de NVPF, de l'électrode négative en sodium métallique, de 100 $\mu$L d'électrolyte, d'un collecteur de courant en acier inoxydable de 1 mm d'épaisseur, d'un ressort en couronne de 1,4 mm d'épaisseur, d'un séparateur en fibre de verre d'épaisseur 16 mm, et de l'enveloppe rigide de la pile (deux pièces creuses s'emboîtant avec un joint). Une fine couche plane de sodium métallique est déposée sur le collecteur de courant, la masse de sodium étant suffisante pour n'être pas limitante dans le système. Le séparateur est imbibé d'électrolyte et placé entre les deux électrodes en regard. Ces éléments sont maintenus sous pression par le ressort à l'intérieur de l'enveloppe rigide, qui est ensuite sertie afin de garantir l'étanchéité du système.

Tests électrochimiques

Les cellules assemblées à partir des électrodes de NVPF sont testées électrochimiquement en régime galvanostatique, entre 3,5 V et 4,3 V vs Na$^+$/Na, en débutant par la charge (courant positif). Le courant utilisé en charge et en décharge est exprimé en C-rate. Le C-rate est la mesure de la vitesse à laquelle une batterie est chargée ou déchargée. Il est défini comme le courant imposé divisé par le courant théorique nécessaire pour délivrer la capacité théorique de la batterie en une heure. Les tests électrochimiques sont effectués à un C-rate de C/10, correspondant à une charge ou décharge théoriques en 10 heures.

Les tests électrochimiques permettent de déterminer la capacité réversible en charge des électrodes de NVPF.

Cette capacité est rapportée en volume de la composition et est exprimée en A.h/L (le volume de la composition est calculée à partir du poids de composition utilisée et de la densité tassée DT).

Exemple 1 : préparation des compositions à base de NVPF selon l'invention

On mélange tout d'abord des quantités stœchiométriques de $V_2O_5$ et de $NH_4H_2PO_4$ en présence de 100%poids d'eau dans un malaxeur de type Controlab L0031.2. La proportion en eau cette proportion est calculée en poids par rapport à l'ensemble des deux réactifs $V_2O_5$ et $NH_4H_2PO_4$. Au bout de 2 heures environ, le mélange s'épaissit et on obtient une pâte de couleur jaune formée de $NH_4VO_2HPO_4$ (présence confirmée par DRX) et d'eau. Cette pâte humide est placée en milieu bien confiné. Pour ce faire, on verse la pâte dans un creuset en SiC fermé par un couvercle en SiC. La pâte est ensuite calcinée à 800°C durant 3 heures avec une rampe de montée en température de 5,5°C/min.

Le $VPO_4$, qui est issu de la calcination est friable et se compose de morceaux compris entre 1 mm et 5 cm. Ce produit est broyé à l'aide d'un tourne jarre pendant environ 2 heures à une vitesse de rotation de 60 rpm. On utilise des jarres en polyéthylène de 20 cm de diamètre de forme légèrement ovoïde permettant le chargement du produit à broyer avec des billes en zircone yttriée de 20 mm de diamètre. Le rapport de chargement peut être de 1 kg de $VPO_4$ pour un chargement de 4 kg de billes. Le $VPO_4$ ainsi broyé est extrait des jarres, séparé des billes et tamisé à 500 $\mu$m à l'aide d'un tamis vibrant pouvant avoir une amplitude de vibration comprise entre 0,5 et 1,6. Le $VPO_4$ tamisé à 500 $\mu$m représente une fraction comprise entre 95% et 98% de la masse totale de $VPO_4$ broyé. Le produit ainsi broyé et tamisé présente une granulométrie dont le Dv50 est compris entre 20 et 60 $\mu$m et le Dv90 entre 80 et 100 $\mu$m.

Le $VPO_4$ ainsi obtenu est mélangé avec une quantité stœchiométrique de NaF et 10% en poids de cellulose microcristalline par rapport au poids total de $VPO_4$+NaF (Sigma-Aldrich). Le mélange des solides est au préalable homogénéisé dans une jarre en polyéthylène remplie de billes en zircone yttriée (billes de 5 mm et 20 mm dans un rapport massique 1 (5 mm):4 (20 mm), rapport massique mélange [$VPO_4$+NaF+cellulose]:billes = 1:3), et mise en rotation autour de son axe de symétrie durant environ 2-3 heures. Le $VPO_4$ a été broyé et tamisé afin de ne conserver que les grains de taille inférieure à 500 $\mu$m.

Le mélange intime des poudres est ensuite calciné à 800°C durant 3 heures avec une rampe de montée en température de 5,5°C/min. Généralement, les mêmes conditions sont appliquées que durant la première calcination pour obtenir $VPO_4$. Il convient de bien confiner la poudre lors de la calcination. Le NVPF finalement obtenu est pur d'après la DRX.

Le NVPF qui est obtenu est finalement désaggloméré afin d'obtenir la distribution granulométrique souhaitée. On peut par exemple réaliser un broyage à billes ou un broyage jet d'air. Pour le broyage à jet d'air, on a utilisé un broyeur à air de référence AFG-100 commercialisé par la société Hosokawa. Le NVPF est introduit dans la chambre de broyage à l'aide d'une vis doseuse. Le débit d'alimentation de la chambre de broyage est ajusté pour se placer dans un régime dit permanent du lit fluidisé ainsi constitué. L'air sous pression est introduit dans la chambre de broyage à l'aide de buses de 2 mm de diamètre à une pression de 5,5 bars. Les particules les plus fines remontent dans la partie haute de la chambre de broyage. Un sélecteur dont la rotation est comprise entre 3000 et 5000 rpm permet de récupérer le produit désaggloméré.

Exemple comparatif 1 :

La composition de cet exemple a été préparée selon un procédé similaire au procédé de l'exemple précédent sauf que :

- le mélange de $V_2O_5$ et de $NH_4H_2PO_4$ est réalisé sans ajout d'eau ;
- du noir de carbone a été ajouté lors de la première calcination afin de pallier à un défaut de confinement de la poudre (un creuset et un couvercle en alumine sont utilisés).

On a pu constater sur les clichés de microscopie que les particules de carbone étaient encore visibles à certains endroits, et ceci même après la calcination. De plus, la composition ainsi préparée présente une densité volumique inférieure à celle des compositions selon l'invention.

**Tableau I**

| Ex. | DRX | | Distribution de tailles | | | | | BET $(m^2/g)$ | DT $(g/mL)$ | % C | spectroscopie Raman | | | capacité $(Ah/L)$ |
|---|---|---|---|---|---|---|---|---|---|---|---|---|---|---|
| | paramètre c (A) | volume de maille (A3) | Dv10 (µm) | Dv50 (µm) | Dv90 (µm) | $P_{12\,µm}$ (%) | σ/m | | | | position des bandes D et G $(cm^{-1})$ | | R = $I_D/I_G$ | |
| 1 | 10,752 | 877,985 | 1,2 | 4,0 | 20,7 | 15,9 | 4,8 | 10,2 | 1,2 | 2,4 | 1344 | 1594 | 0,90 | 130 |
| 2 | 10,751 | 877,696 | 1,2 | 3,8 | 15,6 | 12,0 | 3,8 | 10,6 | 1,1 | 2,3 | | | | 132 |
| 3 | 10,750 | 877,479 | 1,1 | 3,6 | 12,5 | 9,0 | 3,2 | 10,5 | 1,1 | 2,3 | 1345 | 1597 | 0,91 | 119 |
| 4 | 10,751 | 877,791 | 0,78 | 1,8 | 5,5 | 5,9 | 2,6 | 11,3 | 1,4 | 2,4 | | | | |
| 5 | 10,752 | 877,964 | 0,90 | 2,1 | 7,0 | 5,0 | 2,9 | | 1,3 | | | | | 154 |
| 6 | 10,749 | 877,337 | 1,71 | 6,81 | 21,97 | 16,8 | 3,0 | | 1,1 | 2,2 | | | | 125 |
| 7 | 10,751 | 877,583 | 1,56 | 6,47 | 18,21 | 13,3 | 2,6 | | 1,1 | 2,3 | | | | 122 |
| Com p. 1 | 10,753 | 878,353 | 1,0 | 3,5 | 10,0 | 4,8 | 2,6 | 14,0 | 0,79 | 6,7 | 1342 | 1587 | 0,93 | 90 |

conditions utilisées : les compositions des ex. 1 à 3 ont été obtenues par un broyage à jet d'air (resp. avec une vitesse du sélecteur de 3000, 4000 et 5000 rpm) ; les compositions des ex. 4 et 5 ont été obtenues à l'aide d'un broyeur à billes DT : la densité tassée de la composition de l'invention a été mesurée avec un appareil automatique VanKel 50-100 Serial #5-1582-0699.

EP 3 830 029 B1

**Revendications**

1.  Composition comprenant des particules du composé de formule brute $Na_3V_2(PO_4)_2F_3$ (NVPF), éventuellement partiellement oxydé, ainsi que du carbone sous forme graphitisée, **caractérisée par** (1) un taux de carbone compris entre 1,0% et 3,5%, voire entre 1,0% et 3,0%, ce taux étant exprimé en poids de l'élément carbone par rapport au poids total de la composition, (2) par une densité tassée DT supérieure ou égale à 0,9 g/mL, voire supérieure ou égale à 1,0 g/mL, voire encore supérieure ou égale à 1,1 g/mL ou à 1,2 g/mL, la densité tassée étant mesurée à l'aide d'un appareil de tassement de poudre selon le protocole décrit dans la description, (3) par une distribution en volume de tailles de particules présentant les caractéristiques suivantes :

    -   Dv90 ≤ 25,0 μm, voire ≤ 20,0 μm ;
    -   Dv50 compris entre 1,0 μm et 10,0 μm, voire compris entre 1,0 μm et 5,0 μm ; et
    (4) par une distribution en volume de tailles de particules comprenant deux populations : une première population, majoritaire, centrée à une valeur comprise entre 1,0 μm et 4,0 μm, préférentiellement entre 2,0 μm et 3,5 μm ; et une seconde population, minoritaire, centrée à une valeur comprise entre 10,0 μm et 25,0 μm, préférentiellement entre 15,0 μm et 21,0 μm ;
    la distribution en volume de tailles de particules étant obtenue par diffraction laser à partir d'une dispersion de la composition dans l'éthanol, notamment dans l'éthanol anhydre.

2.  Composition selon la revendication 1, consistant essentiellement en des particules de NVPF, éventuellement partiellement oxydé, ainsi qu'en du carbone sous forme graphitisée, **caractérisée par** (1) un taux de carbone compris entre 1,0% et 3,5%, voire entre 1,0% et 3,0%, ce taux étant exprimé en poids de l'élément carbone par rapport au poids total de la composition, (2) par une densité tassée DT supérieure ou égale à 0,9 g/mL, voire supérieure ou égale à 1,0 g/mL, voire encore supérieure ou égale à 1,1 g/mL ou à 1,2 g/mL, (3) par une distribution en volume de tailles de particules présentant les caractéristiques suivantes :

    -   Dv90 ≤ 25,0 μm, voire ≤ 20,0 μm ;
    -   Dv50 compris entre 1,0 μm et 10,0 μm, voire compris entre 1,0 μm et 5,0 μm ; et
    (4) par une distribution en volume de tailles de particules comprenant deux populations : une première population, majoritaire, centrée à une valeur comprise entre 1,0 μm et 4,0 μm, préférentiellement entre 2,0 μm et 3,5 μm ; et une seconde population, minoritaire, centrée à une valeur comprise entre 10,0 μm et 25,0 μm, préférentiellement entre 15,0 μm et 21,0 μm ;
    la distribution en volume de tailles de particules étant obtenue par diffraction laser à partir d'une dispersion de la composition dans l'éthanol, notamment dans l'éthanol anhydre.

3.  Composition selon la revendication 1 ou 2 dans laquelle le NVPF, éventuellement partiellement oxydé, est l'élément majoritaire de la composition.

4.  Composition selon la revendication 1 à 3 dans laquelle la proportion en poids du NVPF, éventuellement partiellement oxydé, est comprise entre 97,0% et 99,0% en poids, cette proportion étant exprimée par rapport au poids total de la composition.

5.  Composition selon l'une des revendications 1 à 4 dans laquelle le paramètre de maille c, mesuré par diffraction des rayons X, est supérieur ou égal à 10,686 angstrom, voire à 10,750 angstrom.

6.  Composition selon l'une des revendications précédentes dans laquelle le volume de maille V, mesuré par diffraction des rayons X, est compris entre 872,604 et 878,390 angstrom³.

7.  Composition selon l'une quelconque des revendications précédentes présentant un rapport R inférieur ou égal à 1,5, de préférence inférieur ou égal à 1,0, voire inférieur ou égal à 0,9, dans lequel

    - R désigne la moyenne arithmétique du rapport $I_D / I_G$ calculé sur au moins 6 mesures réalisées à divers endroits d'un échantillon de la composition selon le protocole d'enregistrement et de traitement des spectres de spectroscopie Raman décrit dans la description;
    - $I_D$ désigne l'intensité de la bande de vibration Raman centrée autour de 1340 cm⁻¹ ;
    - $I_G$ désigne l'intensité de la bande de vibration Raman centrée autour de 1590 cm⁻¹.

8.  Composition selon l'une des revendications précédentes pour laquelle :

- Dv90 est compris entre 5,0 $\mu$m et 25,0 $\mu$m ; ou
- Dv90 est compris entre 5,0 $\mu$m et 20,0 $\mu$m.

9. Composition selon l'une des revendications précédentes pour laquelle Dv50 est compris entre 1,0 $\mu$m et 5,0 $\mu$m.

10. Composition selon l'une des revendications précédentes pour laquelle Dv10 est supérieur ou égal à 0,50 $\mu$m, voire supérieur ou égal à 1,0 $\mu$m.

11. Composition selon l'une des revendications précédentes pour laquelle le coefficient de dispersion $\sigma$/m défini par la relation (Dv90-Dv10)/Dv50, est d'au plus 10,0, voire est compris entre 2,0 et 8,0, voire encore entre 2,5 et 5,0.

12. Composition selon l'une des revendications précédentes pour laquelle le rapport entre l'intensité du pic de la distribution en volume des tailles des particules de la première population, centrée à une valeur comprise entre 1,0 $\mu$m et 4,0 $\mu$m, et l'intensité du pic de la distribution en volume des tailles des particules de la seconde population, centrée à une valeur comprise entre 10,0 $\mu$m et 25,0 $\mu$m, est supérieure ou égal à 3,0 ; la distribution étant obtenue par diffraction laser à partir d'une dispersion de la composition dans l'éthanol, notamment dans l'éthanol anhydre.

13. Composition selon l'une des revendications précédentes pour laquelle la proportion de particules de tailles supérieures à 12,0 $\mu$m, déterminée à partir de la distribution de tailles en volume, est supérieure ou égale à 5,0%, voire supérieure ou égale à 10,0%, voire encore supérieure ou égale à 15,0%; la distribution étant obtenue par diffraction laser à partir d'une dispersion de la composition dans l'éthanol, notamment dans l'éthanol anhydre.

14. Composition selon l'une des revendications précédentes présentant une surface spécifique, obtenue par adsorption/désorption d'azote selon la méthode Brunauer-Emmett-Teller, au moins égale à 2 m$^2$/g, voire supérieure ou égale à 10 m$^2$/g.

15. Composition selon l'une des revendications 1 à 14 dans laquelle la densité tassée est inférieure ou égale à 2,0 g/mL, voire à 1,8 g/mL, voire encore à 1,5 g/mL.

16. Utilisation de la composition selon l'une des revendications 1 à 15 en tant que matériau électrochimiquement actif d'électrodes pour batteries au sodium ou pour batteries sodium-ion.

17. Composition conductrice comprenant la composition selon l'une des revendications 1 à 15, au moins un matériau conducteur d'électrons et éventuellement un liant.

18. Electrode positive comprenant une composition conductrice selon la revendication 17 ou une composition selon l'une des revendications 1 à 15.

**Patentansprüche**

1. Zusammensetzung, die Partikel der Verbindung mit der Summenformel Na$_3$V$_2$(PO$_4$)$_2$F$_3$ (NVPF), welche gegebenenfalls teilweise oxidiert ist, und Kohlenstoff in graphitisierter Form umfasst, **gekennzeichnet durch** (1) einen Kohlenstoffgehalt im Bereich von 1,0 % bis 3,5 %, oder sogar im Bereich von 1,0 % bis 3,0 %, wobei dieser Gehalt als Gewicht des elementaren Kohlenstoffs unter Bezugnahme auf das Gesamtgewicht der Zusammensetzung ausgedrückt ist, (2) durch eine Rütteldichte DT von mindestens 0,9 g/ml, oder sogar von mindestens 1,0 g/ml, oder sogar von mindestens 1,1 g/ml oder 1,2 g/ml, wobei die Rütteldichte unter Verwendung einer Pulverrüttelvorrichtung gemäß der Vorgehensweise gemessen wird, wie sie in der Beschreibung beschrieben ist, (3) durch eine volumenbezogene Partikelgrößenverteilung mit folgenden Eigenschaften:

- Dv90 $\leq$ 25,0 $\mu$m oder sogar $\leq$ 20,0 $\mu$m;
- Dv50 im Bereich von 1,0 $\mu$m bis 10,0 $\mu$m, oder sogar im Bereich von 1,0 $\mu$m bis 5,0 $\mu$m; und
(4) durch eine volumenbezogene Partikelgrößenverteilung, die zwei Populationen umfasst: eine erste Mehrheitspopulation, die auf einen Wert im Bereich von 1,0 $\mu$m bis 4,0 $\mu$m, vorzugsweise im Bereich von 2,0 $\mu$m bis 3,5 $\mu$m zentriert ist; und eine zweite Minderheitspopulation, die auf einen Wert im Bereich von 10,0 $\mu$m bis 25,0 $\mu$m, vorzugsweise im Bereich von 15,0 $\mu$m bis 21,0 $\mu$m zentriert ist;
wobei die volumenbezogene Partikelgrößenverteilung mittels Laserbeugung ausgehend von einer Dispersion der Zusammensetzung in Ethanol, insbesondere in wasserfreiem Ethanol, erhalten wird.

2. Zusammensetzung nach Anspruch 1, die im Wesentlichen aus NVPF-Partikeln, gegebenenfalls teilweise oxidiert, und aus Kohlenstoff in graphitisierter Form besteht, **gekennzeichnet durch** (1) einen Kohlenstoffgehalt im Bereich von 1,0 % bis 3,5 %, oder sogar im Bereich von 1,0 % bis 3,0 %, wobei dieser Gehalt als Gewicht des elementaren Kohlenstoffs unter Bezugnahme auf das Gesamtgewicht der Zusammensetzung ausgedrückt ist, (2) durch eine Rütteldichte DT von mindestens 0,9 g/ml, oder sogar von mindestens 1,0 g/ml, oder sogar von mindestens 1,1 g/ml oder 1,2 g/ml, (3) durch eine volumenbezogene Partikelgrößenverteilung mit folgenden Eigenschaften:

   • Dv90 ≤ 25,0 $\mu$m oder sogar ≤ 20,0 $\mu$m;
   • Dv50 im Bereich von 1,0 $\mu$m bis 10,0 $\mu$m, oder sogar im Bereich von 1,0 $\mu$m bis 5,0 $\mu$m; und
   (4) durch eine volumenbezogene Partikelgrößenverteilung, die zwei Populationen umfasst: eine erste Mehrheitspopulation, die auf einen Wert im Bereich von 1,0 $\mu$m bis 4,0 $\mu$m, vorzugsweise im Bereich von 2,0 $\mu$m bis 3,5 $\mu$m zentriert ist; und eine zweite Minderheitspopulation, die auf einen Wert im Bereich von 10,0 $\mu$m bis 25,0 $\mu$m, vorzugsweise im Bereich von 15,0 $\mu$m bis 21,0 $\mu$m zentriert ist;
   wobei die volumenbezogene Partikelgrößenverteilung mittels Laserbeugung ausgehend von einer Dispersion der Zusammensetzung in Ethanol, insbesondere in wasserfreiem Ethanol, erhalten wird.

3. Zusammensetzung nach Anspruch 1 oder 2, wobei NVPF, welches gegebenenfalls teilweise oxidiert ist, der überwiegende Bestandteil der Zusammensetzung ist.

4. Zusammensetzung nach Anspruch 1 bis 3, wobei der Gewichtsanteil an gegebenenfalls teilweise oxidiertem NVPF im Bereich von 97,0 % bis 99,0 % nach Gewicht liegt, wobei dieser Anteil derart ausgedrückt ist, dass er sich auf das Gesamtgewicht der Zusammensetzung bezieht.

5. Zusammensetzung nach einem der Ansprüche 1 bis 4, wobei der Gitterparameter c, welcher mittels Röntgenbeugung gemessen wird, mindestens 10,686 Ångström oder sogar 10,750 Ångström beträgt.

6. Zusammensetzung nach einem der vorhergehenden Ansprüche, wobei das Gittervolumen V, gemessen mittels Röntgenbeugung, im Bereich von 872,604 bis 878,390 Ångström$^3$ liegt.

7. Zusammensetzung nach einem der vorhergehenden Ansprüche, wobei sie ein Verhältnis R aufweist, das höchstens 1,5, vorzugsweise höchstens 1,0 oder sogar höchstens 0,9 beträgt, wobei

   - R das arithmetische Mittel des Verhältnisses $I_D$ / $I_G$ bezeichnet, das über mindestens 6 Messungen berechnet wurde, welche an verschiedenen Orten einer Probe der Zusammensetzung gemäß dem Protokoll zur Aufzeichnung und Verarbeitung von Raman-Spektroskopiespektren vorgenommen wurden, wie es in der Beschreibung beschrieben ist;
   - $I_D$ die Intensität der Raman-Vibrationsbande bezeichnet, welche rund um 1340 cm$^{-1}$ zentriert ist;
   - $I_G$ die Intensität der Raman-Vibrationsbande bezeichnet, welche rund um 1590 cm$^{-1}$ zentriert ist.

8. Zusammensetzung nach einem der vorhergehenden Ansprüche, wobei:

   - deren Dv90 im Bereich von 5,0 $\mu$m bis 25,0 $\mu$m liegt; oder
   - deren Dv90 im Bereich von 5,0 $\mu$m bis 20,0 $\mu$m liegt.

9. Zusammensetzung nach einem der vorhergehenden Ansprüche, wobei deren Dv50 im Bereich von 1,0 $\mu$m bis 5,0 $\mu$m liegt.

10. Zusammensetzung nach einem der vorhergehenden Ansprüche, wobei deren Dv10 mindestens 0,50 $\mu$m oder sogar mindestens 1,0 $\mu$m beträgt.

11. Zusammensetzung nach einem der vorhergehenden Ansprüche, wobei deren Dispersionskoeffizient $\sigma/m$, welcher durch die Beziehung (Dv90-Dv10)/Dv50 definiert ist, höchstens 10,0 beträgt oder sogar im Bereich von 2,0 bis 8,0 oder sogar im Bereich von 2,5 bis 5,0 liegt.

12. Zusammensetzung nach einem der vorhergehenden Ansprüche, wobei deren Verhältnis zwischen der Intensität des Peaks der volumenbezogenen Partikelgrößenverteilung der ersten Population, welche auf einen Wert im Bereich von 1,0 $\mu$m bis 4,0 $\mu$m zentriert ist, und der Intensität des Peaks der volumenbezogenen Partikelgrößenverteilung der zweiten Population, welche auf einen Wert im Bereich 10,0 $\mu$m bis 25,0 $\mu$m zentriert ist, mindestens 3,0 beträgt; wobei die Verteilung mittels Laserbeugung ausgehend von einer Dispersion der Zusammensetzung in Ethanol, insbesondere in wasserfreiem Ethanol, erhalten wird.

13. Zusammensetzung nach einem der vorhergehenden Ansprüche, wobei deren Anteil von Partikeln mit einer Größe von mehr als 12,0 μm, bestimmt ausgehend von der volumenbezogenen Größenverteilung, mindestens 5,0 %, oder sogar mindestens 10,0 %, oder sogar mindestens 15,0 % beträgt; wobei die Verteilung mittels Laserbeugung ausgehend von einer Dispersion der Zusammensetzung in Ethanol, insbesondere in wasserfreiem Ethanol, erhalten wird.

14. Zusammensetzung nach einem der vorhergehenden Ansprüche, wobei sie eine spezifische Oberfläche, erhalten durch Adsorption/Desorption von Stickstoff nach der Brunauer-Emmett-Teller-Methode, von mindestens 2 $m^2$/g oder sogar von mindestens 10 $m^2$/g aufweist.

15. Zusammensetzung nach einem der Ansprüche 1 bis 14, wobei die Rütteldichte höchstens 2,0 g/ml oder sogar 1,8 g/ml oder sogar 1,5 g/ml beträgt.

16. Verwendung der Zusammensetzung nach einem der Ansprüche 1 bis 15 als elektrochemisch aktives Elektrodenmaterial für Natriumbatterien oder NatriumIonen-Batterien.

17. Leitfähige Zusammensetzung, welche die Zusammensetzung nach einem der Ansprüche 1 bis 15, mindestens ein elektronenleitendes Material und gegebenenfalls ein Bindemittel umfasst.

18. Positive Elektrode, die eine leitfähige Zusammensetzung nach Anspruch 17 oder eine Zusammensetzung nach einem der Ansprüche 1 bis 15 umfasst.

## Claims

1. Composition comprising particles of the compound of empirical formula $Na_3V_2(PO_4)_2F_3$ (NVPF), which is optionally partially oxidized, as well as carbon in graphitized form, **characterized by** (1) a carbon content of between 1.0% and 3.5%, indeed even between 1.0% and 3.0%, this content being expressed by weight of the element carbon with respect to the total weight of the composition, (2) by a tapped density TD of greater than or equal to 0.9 g/ml, indeed even of greater than or equal to 1.0 g/ml, indeed even more of greater than or equal to 1.1 g/ml or 1.2 g/ml, the tapped density being measured using a powder tapping device according to the protocol described in the description, (3) by a particle size distribution by volume exhibiting the following characteristics:

   • Dv90 ≤ 25.0 μm, indeed even ≤ 20.0 μm;
   • Dv50 of between 1.0 μm and 10.0 μm, indeed even of between 1.0 μm and 5.0 μm; and
   (4) by a particle size distribution by volume comprising two populations: a first population, which is predominant, centred at a value of between 1.0 μm and 4.0 μm, preferentially between 2.0 μm and 3.5 μm; and a second population, which is minor, centred at a value of between 10.0 μm and 25.0 μm, preferentially between 15.0 μm and 21.0 μm;
   the particle size distribution by volume being obtained by laser diffraction from a dispersion of the composition in ethanol, in particular in anhydrous ethanol.

2. Composition according to Claim 1, essentially composed of particles of NVPF, which is optionally partially oxidized, as well of carbon in graphitized form, **characterized by** (1) a carbon content of between 1.0% and 3.5%, indeed even between 1.0% and 3.0%, this content being expressed by weight of the element carbon with respect to the total weight of the composition, (2) by a tapped density TD of greater than or equal to 0.9 g/ml, indeed even of greater than or equal to 1.0 g/ml, indeed even more of greater than or equal to 1.1 g/ml or 1.2 g/ml, (3) by a particle size distribution by volume exhibiting the following characteristics:

   • Dv90 ≤ 25.0 μm, indeed even ≤ 20.0 μm;
   • Dv50 of between 1.0 μm and 10.0 μm, indeed even of between 1.0 μm and 5.0 μm; and
   (4) by a particle size distribution by volume comprising two populations: a first population, which is predominant, centred at a value of between 1.0 μm and 4.0 μm, preferentially between 2.0 μm and 3.5 μm; and a second population, which is minor, centred at a value of between 10.0 μm and 25.0 μm, preferentially between 15.0 μm and 21.0 μm;

the particle size distribution by volume being obtained by laser diffraction from a dispersion of the composition in ethanol, in particular in anhydrous ethanol.

3.  Composition according to Claim 1 or 2, in which NVPF, which is optionally partially oxidized, is the predominant element of the composition.

4.  Composition according to Claim 1 to 3, in which the proportion by weight of NVPF, which is optionally partially oxidized, is between 97.0% and 99.0% by weight, this proportion being expressed with respect to the total weight of the composition.

5.  Composition according to one of Claims 1 to 4, in which the unit cell parameter c, measured by X-ray diffraction, is greater than or equal to 10.686 angstroms, indeed even greater than or equal to 10.750 angstroms.

6.  Composition according to one of the preceding claims, in which the unit cell volume V, measured by X-ray diffraction, is between 872.604 and 878.390 angstroms$^3$.

7.  Composition according to any one of the preceding claims, exhibiting a ratio R of less than or equal to 1.5, preferably of less than or equal to 1.0, indeed even of less than or equal to 0.9, in which:

    - R denotes the arithmetic mean of the ratio $I_D/I_G$ calculated over at least 6 measurements carried out at various points of a sample of the composition according to the protocol for recording and processing of the Raman spectroscopy spectra described in the description;
    - $I_D$ denotes the intensity of the Raman vibration band centred around 1340 cm$^{-1}$;
    - $I_G$ denotes the intensity of the Raman vibration band centred around 1590 cm$^{-1}$.

8.  Composition according to one of the preceding claims, for which:

    - Dv90 is between 5.0 $\mu$m and 25.0 $\mu$m; or
    - Dv90 is between 5.0 $\mu$m and 20.0 $\mu$m.

9.  Composition according to one of the preceding claims, for which Dv50 is between 1.0 $\mu$m and 5.0 $\mu$m.

10. Composition according to one of the preceding claims, for which Dv10 is greater than or equal to 0.50 $\mu$m, indeed even greater than or equal to 1.0 $\mu$m.

11. Composition according to one of the preceding claims, for which the coefficient of dispersion $\sigma$/m, defined by the relationship (Dv90-Dv10)/Dv50, is at most 10.0, indeed even is between 2.0 and 8.0, indeed even more between 2.5 and 5.0.

12. Composition according to one of the preceding claims, for which the ratio of the intensity of the peak of the particle size distribution by volume of the first population, centred at a value of between 1.0 $\mu$m and 4.0 $\mu$m, to the intensity of the peak of the particle size distribution by volume of the second population, centred at a value of between 10.0 $\mu$m and 25.0 $\mu$m, is greater than or equal to 3.0; the distribution being obtained by laser diffraction from a dispersion of the composition in ethanol, in particular in anhydrous ethanol.

13. Composition according to one of the preceding claims, for which the proportion of particles with sizes of greater than 12.0 $\mu$m, determined from the size distribution by volume, is greater than or equal to 5.0%, indeed even greater than or equal to 10.0%, indeed even more greater than or equal to 15.0%; the distribution being obtained by laser diffraction from a dispersion of the composition in ethanol, in particular in anhydrous ethanol.

14. Composition according to one of the preceding claims, exhibiting a specific surface, obtained by adsorption/desorption of nitrogen according to the Brunauer-Emmett-Teller method, at least equal to 2 m$^2$/g, indeed even greater than or equal to 10 m$^2$/g.

15. Composition according to one of Claims 1 to 14, in which the tapped density is less than or equal to 2.0 g/ml, indeed even 1.8 g/ml, indeed even more 1.5 g/ml.

16. Use of the composition according to one of Claims 1 to 15 as electrochemically active material of electrodes for sodium batteries or for sodium-ion batteries.

17. Conductive composition comprising the composition according to one of Claims 1 to 15, at least one electronconducting material and optionally a binder.

18. Positive electrode comprising a conductive composition according to Claim 17 or a composition according to one of Claims 1 to 15.

# Fig. 1

# Fig. 2

# Fig. 3

Capacité (mA.h/g)

**RÉFÉRENCES CITÉES DANS LA DESCRIPTION**

**Documents brevets cités dans la description**

- FR 1857116
- WO 18229447 A
- FR 3042313

- WO 2017064189 A
- CN 103594716
- CN 105655565